# EUROPÄISCHE PATENTSCHRIFT

(11) **EP 1 495 922 B1**
(45) Veröffentlichungstag und Bekanntmachung des Hinweises auf die Patenterteilung: **14.10.2009**
(21) Anmeldenummer: 04090271.0
(22) Anmeldetag: 06.07.2004
(51) Int. Cl.: B60R 21/20, B60R 13/02

(54) **Verkleidungsteil, insbesondere Innenraumverkleidungsteil eines Kraftfahrzeuges**
Trim component, in particular interior trim component for a motor vehicle
Elément d'habillage, en particulier élément intérieur pour un véhicule automobile

(30) Priorität: 10.07.2003 DE 10332280
(43) Veröffentlichungstag der Anmeldung: 12.01.2005
(73) Patentinhaber: Volkswagen Aktiengesellschaft, 38436 Wolfsburg (DE); Basell Poliolefine Italia S.p.A., 20124 Milano (IT)
(72) Erfinder: Radon, Annett, 38442 Wolfsburg (DE); Vossen, Jacobus, 38442 Wolfsburg (DE); Dammer, Christoph, 77694 Kehl (DE); Licht, Erik Dr., 55126 Mainz (DE); Dahm, Ulrich Dr., 55116 Mainz (DE)
(74) Vertreter: Schneider, Henry

(56) Entgegenhaltungen:
- EP-A- 0 583 926
- EP-A- 0 853 027
- WO-A-99/47386
- US-A- 5 530 057

## Beschreibung

Die Erfindung betrifft ein Verkleidungsteil, insbesondere ein Innenraumverkleidungsteil eines Kraftfahrzeuges, das eine Dekorschicht und eine Tragschicht umfasst.

Verkleidungsteile der gattungsgemäßen Art sind bekannt. So ist aus EP 0 853 027 B1 eine Säulenverkleidung für Säulen von Kraftfahrzeugen bekannt, die sich durch einen Zweikomponentenaufbau auszeichnet. Hierbei ist ein Kunststoffformteil als Tragschicht mit einer Dekorschicht aus Textil oder textilähnlicher Folie versehen. Mittels derartiger Säulenverkleidungen soll neben einer optisch ansprechenden Dekorschicht eine verdeckte Anordnung von Aufprallsystemen, insbesondere Seitenairbags, erreicht werden. Beim Auslösen der Aufprallsysteme wird die Säulenverkleidung entlang einer definierten Sollbruchstelle aufgesprengt, so dass der Airbag sich frei entfalten kann. Gemäß EP 0 853 027 B1 wird ein als Tragschicht dienendes Kunststoffformteil durch die textile Dekorschicht gehalten. Die textile Dekorschicht wird über Haftvermittler mit dem Kunststoffformteil gefügt.

Der Erfindung liegt die Aufgabe zugrunde, ein Verkleidungsteil der gattungsgemäßen Art zu schaffen, das sich durch einen einfachen Aufbau und leichte Herstellbarkeit auszeichnet.

Erfindungsgemäß wird diese Aufgabe durch ein Verkleidungsteil mit den im Anspruch 1 genannten Merkmalen gelöst. Dadurch, dass die Dekorschicht aus einem Material besteht, das einen hohen Schlagzähigkeitskoeffizienten und einen hohen Reißdehnungskoeffizienten aufweist, wird in vorteilhafter Weise ein Verkleidungsteil erhalten, das einfach herstellbar ist und sich durch vorteilhafte physikalische und mechanische Eigenschaften auszeichnet. Die Dekorschicht und die Tragschicht des Verkleidungsteils bestehen aus PP(Polypropylen)-Material, die Dekorschicht aus einer PP-Folie und die Tragschicht aus einem PP-Formteil. Durch vorzugsweises Hinterspritzen der PP-Folie mit dem PP-Formteil kann in einfacher Weise ein unterschiedliche Konturen aufweisendes Verkleidungsteil geschaffen werden. Durch das Hinterspritzen der PP-Folie mit dem PP-Formteil bildet sich eine feste Fügeverbindung zwischen Dekorschicht und Tragschicht. Während des Hinterspritzens schmilzt die die Dekorschicht bildende PP-Folie leicht an, so dass eine feste Fügeverbindung auf einfache Weise erhalten wird. Ein aufwendiges Kaschieren, wie beispielsweise Kleben der Dekorschicht auf einer Tragschicht, entfällt somit.

Insbesondere wird vorteilhaft erreicht, dass durch die definierte Schlagzähigkeitskoeffizienten und Reißdehnungskoeffizienten aufweisende Dekorschicht eine weiche, Stoßbelastungen absorbierende Oberfläche geschaffen ist. Aufgrund dieser bevorzugten Eigenschaften des Verkleidungsteiles eignet sich dieses insbesondere zum Einsatz als Innenraumverkleidungsteil in Kraftfahrzeugen. Hierbei kann eine zufällige oder crashbedingte Stoßberührung eines derartigen Innenraumverkleidungsteiles durch eine Person gedämpft werden, so dass ein Verletzungsrisiko minimiert ist.

Darüber hinaus eigenen sich derartige Innenraumverkleidungsteile auch zur Verkleidung verdeckt angeordneter Rückhaltesysteme, beispielsweise Airbags. Beim Auslösen eines derartigen Rückhaltesystems wird das Verkleidungsteil derart belastet, dass eine Austrittsöffnung für das Rückhaltesystem, beispielsweise den Airbag, entsteht. Hierdurch erfährt das Verkleidungsteil oder Teile des Verkleidungsteiles eine Beschleunigung in den Innenraum des Kraftfahrzeuges hinein. Durch die mit der Tragschicht gefügte Dekorschicht, die eine PP-Folie ist, wird hierbei aufgrund des definierten Reißdehnungskoeffizienten, der mindestens 100 %, vorzugsweise mindestens 200 %, insbesondere mindestens 400 % beträgt, ein Splittern und Losreißen der Tragschicht vermieden. Diese bleibt aufgrund der Fügeverbindung zwischen PP-Folie und Tragschicht mit der Folie verbunden, die aufgrund ihres Reißdehnungskoeffizienten die auf die Tragschicht wirkenden Beschleunigungskräfte kompensiert und diese daran hindert, in den Fahrzeuginnenraum hinein zu beschleunigen. Neben definierten Aufreiß- und Öffnungsvorgängen bei derartigen Innenraumverkleidungsteilen ist auch ein unkontrolliertes Herumfliegen von Teilstücken der Verkleidung vermieden.

Durch die miteinander gefügten Dekorschicht und Tragschicht kann eine Bruchfestigkeit sowohl der Dekorschicht als auch der Tragschicht relativ gering sein, da über den hohen Reißdehnungskoeffizienten der Dekorschicht der Verbund des Innenraumverkleidungsteiles erhalten bleibt.

In weiterer bevorzugter Ausgestaltung der Erfindung ist vorgesehen, dass die Dekorschicht in ihrer optischen und/oder haptischen Oberflächenbeschaffenheit variierbar ist. So lässt sich die aus PP-Folie bestehende Dekorschicht in vielfältigen Grundfarben, Farbnuancen, gegebenenfalls auch mit Metalliceffekten und dergleichen einfärben. Somit wird neben einem sehr funktionellen Aufbau des Verkleidungsteiles, insbesondere Innenraumverkleidungsteiles, auch eine optisch angepasste Gestaltung an ein Innenraumgesamtkonzept in einfacher Weise möglich.

Weitere bevorzugte Ausgestaltungen der Erfindung ergeben sich aus den übrigen, in den Unteransprüchen genannten Merkmalen.

Die Erfindung wird nachfolgend in Ausführungsbeispielen anhand der zugehörigen Zeichnungen näher erläutert. Es zeigen:
- Figur 1: eine schematische Schnittdarstellung durch ein Verkleidungsteil in einer ersten Ausführungsvariante;
- Figuren 2 und 3: schematische Schnittdarstellungen durch ein Verkleidungsteil einer zweiten Ausführungsvariante und
- Figuren 4 und 5: schematische Schnittdarstellungen durch ein Verkleidungsteil in einer dritten Ausführungsvariante.

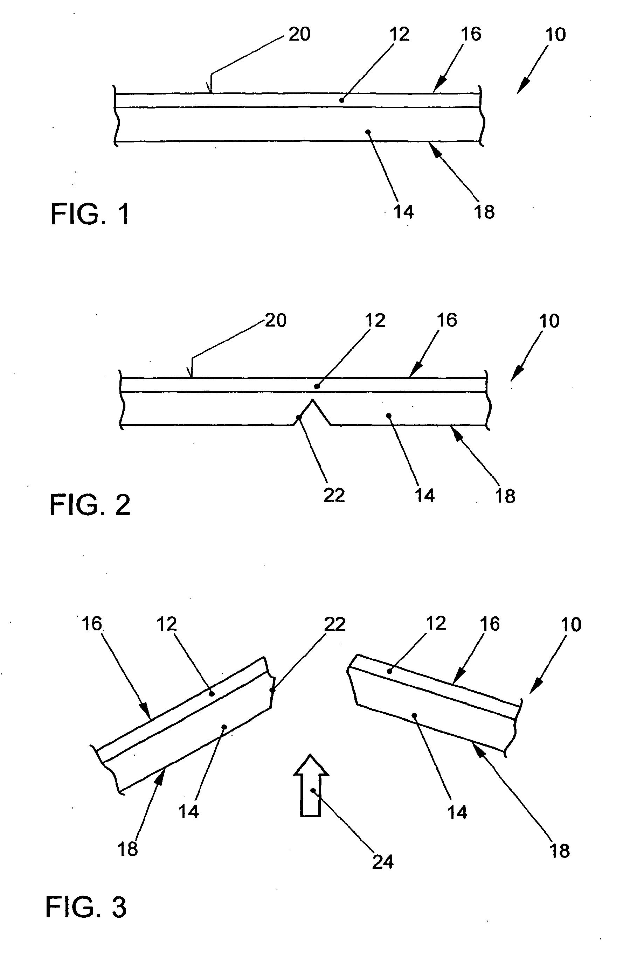

In Figur 1 ist schemetisch eine Schnittdarstellung eines insgesamt mit 10 bezeichneten Verkleidungsteils gezeigt. Das Verkleidungsteil 10 besteht aus einer Dekorschicht 12 und einer Tragschicht 14. Die Dekorschicht 12 besteht aus einer PP-Folie 16 und die Tragschicht 14 aus einem an die PP-Folie 16 hinterspritzten PP-Formteil 18. Während des Hinterspritzens entsteht zwischen der Dekorschicht 12 und der Tragschicht 14 eine direkte Fügeverbindung. Der Einsatz zusätzlicher Haftvermittler oder dergleichen ist nicht erforderlich. Das PP-Formteil 18 besitzt beispielsweise eine Dicke von 3 mm, während die PP-Folie 16 eine Dicke von beispielsweise 1 mm aufweist. Nach einer weiteren Ausführungsvariante kann die Dicke des PP-Formteiles 18 beispielsweise 3,5 mm und die Dicke der PP-Folie 16 0,5 mm betragen. Die PP-Folie 16 besitzt einen Reißdehnungskoeffizienten von > 100 %, beispielsweise von 800 %. Ein Schlagzähigkeitskoeffizient der PP-Folie 16 ist so gewählt, dass bei einer Messmethode nach ISO 180/1A kein Bruch bei einer Temperatur von < -10, vorzugsweise < -25°C, insbesondere bei -50 °C erfolgt.

Die PP-Folie 16 kann über Farbpigmente koloriert oder auch eingefärbt sein, so dass sich beispielsweise unterschiedliche Oberflächenfarben, beispielsweise auch mit Metalliceffekten oder dergleichen, ergeben können. Vor Hinterspritzen der PP-Folie 16 mit dem PP-Formteil 18 kann die PP-Folie 16 auch tiefgezogen werden.

Das in Figur 1 gezeigte Verkleidungsteil 10 kann beispielsweise als Innenraumverkleidungsteil eines Kraftfahrzeuges eingesetzt werden. Nach entsprechender Formgebung, die durch das Hinterspritzen der PP-Folie 16 mit dem PP-Formteil 18 in einfacher Weise realisierbar ist, kann das Verkleidungsteil 10 beispielsweise insgesamt oder als Teil der Instrumententafel, Türverkleidung, Türbrüstung, Säulenverkleidung, Dachverkleidung, Handschuhkasten, Radhausverkleidung, Sitzverkleidung oder dergleichen eingesetzt werden. Aufgrund der Elastizität eines derartigen Verkleidungsteiles 10 kann eine auf die Oberfläche 20 des Verkleidungsteiles 10 einwirkende Stoßbelastung absorbiert werden. Ein Brechen des Verkleidungsteiles 10 und somit Entstehen von gegebenenfalls scharfkantigen Bruchkanten oder dergleichen wird vermieden.

Figur 2 zeigt ein Verkleidungsteil 10 in einer weiteren Ausführungsvariante, wobei gleiche Teile wie Figur 1 mit gleichen Bezugszeichen versehen und nicht nochmals erläutert sind. Hier ist zusätzlich in das PP-Formteil 18 eine Kerbe 22 integriert. Die Kerbe 22 kann während des Hinterspritzens der PP-Folie 16 durch ein entsprechendes Werkzeug in einfacher Weise realisiert werden. Die Kerbe 22 führt zu einer definierten Materialschwächung des Verkleidungsteiles 10. Hierbei kann über Länge, Lage und Formgebung der Kerbe 22 diese definierte Materialschwächung vorgegeben werden. Insbesondere wenn das Verkleidungsteil 10 zum Verkleiden eines Rückhaltesystems, beispielsweise eines Airbags 32 in Kraftfahrzeugen, eingesetzt wird, wird erreicht, dass - wie Figur 3 zeigt - das Verkleidungsteil 10 an definierter Stelle aufreißt, so dass ein entsprechend dem Doppelpfeil 24 schematisch angedeuteter Airbag 32 in den Innenraum 30 des Kraftfahrzeuges sich entfalten kann und seine gewollte Schutzfunktion ausübt. Aufgrund der Elastizität des Verkleidungsteiles 10 wird sichergestellt, dass die mit der Sprengwirkung verbundene Krafteinwirkung auf das Verkleidungsteil 10 nicht zu einem Splittern und/oder Abreißen einzelner Bestandteile des Verkleidungsteiles 10, sowohl der PP-Folie 16 als auch des PP-Formteiles 18, führt. Aufgrund der guten Haftfestigkeit der Fügeverbindung zwischen der PP-Folie 16 und dem PP-Formteil 18 wird ein Absprengen scharfkantiger Teile vermieden.

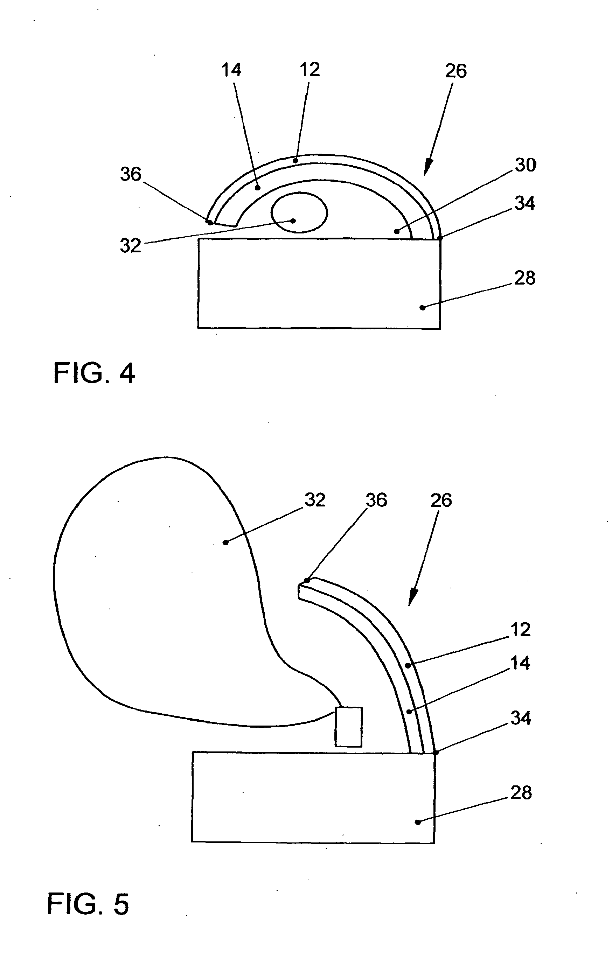

In den Figuren 4 und 5 ist ein Ausführungsbeispiel schematisch dargestellt, bei dem das Verkleidungsteil 10 als Säulenverkleidung 26 einer Säule 28 eines Kraftfahrzeuges dient. Bei der Säule 28 kann es sich beispielsweise um eine A-, B- oder C-Säule handeln. Die Säulenverkleidung 26 ist in etwa bogenförmig ausgebildet, so dass sich ein Innenraum 30 zwischen der Säulenverkleidung 26 und der Säule 28 ergibt. In dem Innenraum 30 ist ein Rückhaltesystem, beispielsweise ein Airbag 32, angeordnet. Die Säulenverkleidung 26 ist an ihrem einen Ende 34 fest mit der Säule 28 verbunden, während das andere Ende 36 lediglich in Berührungskontakt mit der Säule 28 steht. Zur Verdeutlichung ist hier ein Spalt in vergrößerter Darstellung dargestellt, der im konkreten Anwendungsfalle in der Regel nicht sichtbar ist.

Die in Figur 4 gezeigte Ausführungsvariante führt dazu, dass - wie Figur 5 zeigt - bei Auslösen des Airbags 32 die Säulenverkleidung 26 scharnierartig um ihr mit der Säule 28 verbundenes Ende 34 aufklappt. Hierdurch wird die Entfaltung des Airbags 32 nicht behindert. Andererseits ergibt sich eine feste Verbindung zwischen Verkleidungsteil 10 und Säule 28, so dass dieses nicht mit abgesprengt wird. Die bereits anhand der vorhergehenden Figuren ausführlich erläuterten physikalischen und mechanischen Eigenschaften der Säulenverkleidung 26 führen dazu, dass, insbesondere aufgrund der definierten Reißdehnung und der definierten Schlagzähigkeit, ein Abspringen einzelner, gegebenenfalls scharfkantiger Teile der Säulenverkleidung 26 verhindert ist.

Wie anhand der vorstehenden Figuren verdeutlicht, lässt sich ein Verkleidungsteil 10, beispielsweise die Säulenverkleidung 26, in einfacher Weise aus einem Verbund gleichartiger Materialien, insbesondere PP, herstellen. Hierdurch ergibt sich eine umweltschonende Recycelbarkeit der Verkleidungsteile 10. Gleichzeitig entsteht bei der Herstellung der Verkleidungsteile 10 kein nicht wiederverwertbarer Abfall. Die PP-Folie 16 liegt üblicherweise als Folienbahn vor, die in geeigneten Spritzautomaten hinterspritzt wird. Ein eventueller Verschnitt kann ebenfalls wieder recycelt werden. Die Verwendung von gegebenenfalls lösungsmittelhaltigen Haftvermittlern zwischen Dekorschicht 12 und Tragschicht 14 entfällt.

### BEZUGSZEICHENLISTE

- 10: Verkleidungsteil
- 12: Dekorschicht
- 14: Tragschicht
- 16: PP-Folie
- 18: PP-Formteil
- 20: Oberfläche
- 22: Kerbe
- 24: Doppelpfeil
- 26: Säulenverkleidung
- 28: Säule
- 30: Innenraum
- 32: Airbag
- 34: Ende
- 36: Ende

## Patentansprüche

1. Verkleidungsteil (10) für einen Innenraum eines Kraftfahrzeuges mit einer Dekorschicht (12) und einer Tragschicht (14), **dadurch gekennzeichnet, dass** die Dekorschicht (12) aus einer PP-Folie (16) und die Tragschicht (14) aus einem PP-Formteil (18) besteht und die Dekorschicht (12) aus einem Material mit einem Reißdehnungskoeffizienten von mindestens 100 % besteht und einen Schlagzähigkeitskoeffizienten nach ISO 180/1A von "kein Bruch" bei < -10 °C aufweist.

2. Verkleidungsteil nach Anspruch 1, **dadurch gekennzeichnet, dass** die PP-Folie (16) mit dem PP-Formteil (18) hinterspritzt ist.

3. Verkleidungsteil nach einem der vorhergehenden Ansprüche, **dadurch gekennzeichnet, dass** der Reißdehnungskoeffizient mindestens 200 %, vorzugsweise mindestens 400 %, insbesondere 800 % beträgt.

4. Verkleidungsteil nach einem der vorhergehenden Ansprüche, **dadurch gekennzeichnet, dass** der Schlagzähigkeitskoeffizient "kein Bruch"- bei < -25°C, insbesondere bei -50°C gegeben ist.

5. Verkleidungsteil nach einem der vorhergehenden Ansprüche, **dadurch gekennzeichnet, dass** die Dekorschicht (12) in ihrer optischen und/oder haptischen Oberflächenbeschaffenheit variierbar ist.

6. Verkleidungsteil nach einem der vorhergehenden Ansprüche, **dadurch gekennzeichnet, dass** das Verkleidungsteil (10) insgesamt oder als Teil einer Instrumententafel, Türverkleidung, Türbrüstung, Säulenverkleidung, Dachverkleidung, Radhausverkleidung, Sitzverkleidung, eines Handschuhkastens oder dergleichen eingesetzt ist.

7. Verkleidungsteil nach einem der vorhergehenden Ansprüche, **dadurch gekennzeichnet, dass** das Verkleidungsteil (10) wenigstens eine, insbesondere als Kerbe (22) ausgebildete, Materialschwächung der Tragschicht (14) aufweist.

8. Verkleidungsteil nach einem der vorhergehenden Ansprüche, **dadurch gekennzeichnet, dass** das Verkleidungsteil (10) einseitig mit einem Karosserieteil des Kraftfahrzeuges, insbesondere mit einer Säule (28), verbunden ist.

9. Verkleidungsteil nach einem der vorhergehenden Ansprüche, **dadurch gekennzeichnet, dass** das Verkleidungsteil (10) komplett aus recycelbaren Materialien besteht.

## Claims

1. Trim component (10) for an interior of a motor vehicle with a decorative layer (12) and a backing layer (14), **characterized in that** the decorative layer (12) is composed of a PP foil (16) and the backing layer (14) is composed of a PP moulding (18) and the decorative layer (12) is composed of a material whose tensile strain at break is at least 100% and whose impact resistance according to ISO 180/1A is "no fracture" at < -10°C.

2. Trim component according to Claim 1, **characterized in that** the PP foil (16) has been backmoulded with the PP moulding (18) by an injection-moulding method.

3. Trim component according to any of the preceding claims, **characterized in that** the tensile strain at break is at least 200%, preferably at least 400%, in particular 800%.

4. Trim component according to any of the preceding claims, **characterized in that** the impact resistance is "no fracture" at < -25°C, in particular at -50°C.

5. Trim component according to any of the preceding claims, **characterized in that** the decorative layer (12) has variable optical and/or haptic surface characteristics.

6. Trim component according to any of the preceding claims, **characterized in that** the trim component (10) has been used in its entirety or as component of an instrument panel, door trim, door shoulder, pillar trim, roof trim, wheel-arch trim, or seat trim, or of a glove box or the like.

7. Trim component according to any of the preceding claims, **characterized in that** the trim component (10) has at least one point of weakness, in particular designed as a notch (22), in the material of the backing layer (14).

8. Trim component according to any of the preceding claims, **characterized in that** the trim component (10) has been bonded, on one side, to a bodywork component of the motor vehicle, in particular to a pillar (28).

9. Trim component according to any of the preceding claims, **characterized in that** the trim component (10) is composed entirely of recyclable materials.

## Revendications

1. Elément d'habillage (10) pour un habitacle d'un véhicule automobile, avec une couche de parement (12) et une couche porteuse (14), **caractérisé en ce que** la couche de parement (12) consiste en un film de PP (16) et la couche porteuse (14) consiste en une pièce moulée en PP (18) et la couche de parement (12) consiste en une matière avec un coefficient d'élongation à la rupture d'au moins 100 % et présente un coefficient de résistance aux chocs selon ISO 180/1A de « aucune rupture » à <-10°C.

2. Elément d'habillage selon la revendication 1,
**caractérisé en ce que** le film en PP (16) subit une projection à l'arrière avec la pièce moulée en PP (18).

3. Elément d'habillage selon l'une quelconque des revendications précédentes, **caractérisé en ce que** le coefficient d'élongation à la rupture est d'au moins 200 %, de préférence d'au moins 400 %, notamment de 800 %.

4. Elément d'habillage selon l'une quelconque des revendications précédentes, **caractérisé en ce que** le coefficient de résistance aux chocs « aucune rupture » est donné à <-25°C, notamment à -50°C.

5. Elément d'habillage selon l'une quelconque des revendications précédentes, **caractérisé en ce que** la couche de parement (12) est variable au niveau de ses caractéristiques superficielles optiques et/ou haptiques.

6. Elément d'habillage selon l'une quelconque des revendications précédentes, **caractérisé en ce que** l'élément d'habillage (10) est utilisé en totalité ou en tant que partie d'un tableau de bord, d'un habillage de portière, d'un appui de portière, d'un habillage de montant, d'un habillage de pavillon, d'un habillage de passage de roues, d'un habillage de siège, d'une boîte à gants ou similaire.

7. Elément d'habillage selon l'une quelconque des revendications précédentes, **caractérisé en ce que** l'élément d'habillage (10) comporte au moins un affaiblissement de matière de la couche porteuse (14), notamment conçu sous la forme d'une encoche (22).

8. Elément d'habillage selon l'une quelconque des revendications précédentes, **caractérisé en ce que** l'élément d'habillage (10) est relié unilatéralement à un élément de carrosserie du véhicule automobile, notamment à un montant (28).

9. Elément d'habillage selon l'une quelconque des revendications précédentes, **caractérisé en ce que** l'élément d'habillage (10) consiste en totalité en des matières recyclables.
